# EUROPÄISCHE PATENTSCHRIFT

(11) **EP 0 978 451 B1**
(45) Veröffentlichungstag und Bekanntmachung des Hinweises auf die Patenterteilung: **04.07.2001**
(21) Anmeldenummer: 99115311.5
(22) Anmeldetag: 03.08.1999
(51) Int. Cl.: B65B 25/06, A23B 4/048, A23B 4/052

(54) **Verpackungsmaschine für Lebensmittel**
Packaging machine for food products
Machine d'emballage pour produits alimentaires

(30) Priorität: 07.08.1998 DE 19835726
(43) Veröffentlichungstag der Anmeldung: 09.02.2000
(73) Patentinhaber: Firma Newpack Verpackungssysteme GmbH, 49143 Bissendorf (DE)
(72) Erfinder: Lägel, Stephanie, 49143 Bissendorf (DE); Schmidt, Horst, 58099 Hagen (DE)
(74) Vertreter: Basfeld, Rainer, Dr. Dipl.-Phys.

(56) Entgegenhaltungen:
- DE-A- 2 260 758
- US-A- 4 414 232
- US-A- 5 043 174

## Beschreibung

Die vorliegende Erfindung betrifft eine Verpackungsmaschine für Lebensmittel, umfassend mindestens eine Siegeleinrichtung, in der Aufnahmebehälter in Form von Beuteln, Schläuchen oder schalenähnlichen Formteilen, die die zu verpackenden Lebensmittelprodukte aufnehmen können, versiegelt werden können.

Verpackungsmaschinen der vorgenannten Art können beispielsweise als Tiefziehverpackungsmaschinen, Schalensiegelverpackungsmaschinen, Schlauchbeutelverpackungsmaschinen oder Kammerverpackungsmaschinen ausgebildet sein. Bei sämtlichen genannten Maschinen erfolgt das Würzen des zu verpackenden Lebensmittelprodukts manuell, so daß immer die Gefahr des Eintrags von Bakterien besteht. Die US-A-4 414 232 beschreibt das Besprühen, von Lebensmittelprodukten mit Kondensat bevor sie einer Verpackungsmaschine zugeführt werden.

Das der vorliegenden Erfindung zugrundeliegende Problem ist die Schaffung einer Verpackungsmaschine der eingangs genannten Art, bei der das Würzen der zu verpackenden Lebensmittelprodukte nicht oder nur unwesentlich die Gefahr birgt, daß durch das Würzen Bakterien eingebracht werden.

Dies wird erfindungsgemäß dadurch erreicht, daß die Verpackungsmaschine eine Sprühvorrichtung umfaßt, die das Besprühen der Lebensmittelprodukte mit Kondensat ermöglicht und daß die Sprühvorrichtung in Förderrichtung unmittelbar vor oder in der Siegeleinrichtung angeordnet ist. Dieses Kondensat kann vorzugsweise ein Gewürzrauchkondensat sein oder aus Flüssigrauch bestehen. Auf diese Weise kann ohne manuelle Tätigkeit dem zu verpackenden Lebensmittelprodukt der gewünschte Geschmack oder Geruch gegeben werden. Die Gefahr der Einbringung von Bakterien besteht nicht mehr, da ohne jegliche Zwischenarbeitsgänge hygienisch beispielsweise lebensmittelechte und fettarme Kondensate auf die Lebensmittelprodukte aufgebracht werden.

Gemäß einer bevorzugten Ausführungsform der vorliegenden Erfindung umfaßt die Sprühvorrichtung mindestens eine Düse, die ein Besprühen des Lebensmittelprodukts mit Kondensat zuläßt. Die Düsen können zur besseren Vernebelung des Kondensats als Spezialdüsen beispielsweise gemäß der deutschen Offenlegungsschrift DE 197 29 766 A1 ausgeführt sein. Die Besprühung des Lebensmittelprodukts kann von oben und/oder von der Seite erfolgen. Hierzu umfaßt die Sprühvorrichtung vorteilhafterweise eine Zuführleitung, die an ihrem Ende oder am Ende davon ausgehender Teilleitungen jeweils eine der Düsen trägt. Alternativ oder zusätzlich dazu kann die Zuführleitung in eine Verteilerleiste übergehen, an der mehrere Düsen angebracht sind. Durch die an unterschiedlichen Stellen anbringbaren Düsen ergibt sich eine optimal an die gewählte Verpackungsmaschine sowie das zu verpackende Lebensmittel angepaßte Besprühung der Lebensmittel.

Es besteht die Möglichkeit, die erfindungsgemäße Verpackungsmaschine als Tiefziehverpackungsmaschine auszubilden. Bei einer derartigen Tiefziehverpackungsmaschine kann das Besprühen des Lebensmittelprodukts in Förderrichtung unmittelbar vor der Siegeleinrichtung erfolgen. In diesem Fall kann problemlos von oben auf das Produkt gesprüht werden, weil dieses noch nicht mit einer Oberfolie abgedeckt ist.

Alternativ dazu kann bei der Tiefziehverpackungsmaschine das Besprühen des Lebensmittelprodukts auch innerhalb der Siegeleinrichtung erfolgen.

Alternativ dazu kann die erfindungsgemäße Verpackungsmaschine als Schalensiegelverpackungsmaschine ausgebildet sein.

Alternativ dazu kann die Verpackungsmaschine als Schlauchbeutelverpackungsmaschine ausgebildet sein. Hier kann die Besprühung des Lebensmittelprodukts in der Schlauchbeutelverpackungsmaschine während der Dauer eines Vorschubtaktes kurz vor dem Versiegeln erfolgen. Es besteht weiterhin die Möglichkeit, daß die Besprühung des Lebensmittelprodukts in der Schlauchbeutelverpackungsmaschine während des Stillstands des Lebensmittelprodukts erfolgt, insbesondere während gleichzeitig das in Förderrichtung benachbarte Lebensmittelprodukt in dem ihn umgebenden als Schlauch ausgebildeten Aufnahmebehälter versiegelt wird.

Es besteht weiterhin die Möglichkeit, daß die erfindungsgemäße Verpackungsmaschine als Kammerverpackungsmaschine ausgebildet ist. Hierbei ist der Aufnahmebehälter als Beutel ausgebildet, in den von der Seite her ein Teil der Sprühvorrichtung, insbesondere die Zuführleitung mit daran angebrachter Düse, hineinragen kann, aus dem heraus das Lebensmittelprodukt besprüht werden kann. Nach dem Besprühen wird der Beutel versiegelt.

Weitere Vorteile und Merkmale der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische Ansicht einer Tiefziehverpackungsmaschine, bei der das erfindungsgemäße Besprühen des Produktes vor dem Siegelwerkzeug stattfindet;
- Fig. 2: eine schematische Ansicht einer Tiefziehverpackungsmaschine, bei der das erfindungsgemäße Besprühen des Produktes im Siegelwerkzeug stattfindet;
- Fig. 3: eine schematische Seitenansicht einer Schlauchbeutelverpackungsmaschine, bei der das Produkt mit mehreren Düsen von oben besprüht wird;
- Fig. 4: eine schematische Seitenansicht einer Schlauchbeutelverpackungsmaschine, bei der das Produkt während der Dauer des Vorschubtaktes besprüht wird;
- Fig. 5: eine schematische Seitenansicht einer Kammerverpackungsmaschine mit erfindungsgemäßer Besprühvorrichtung.

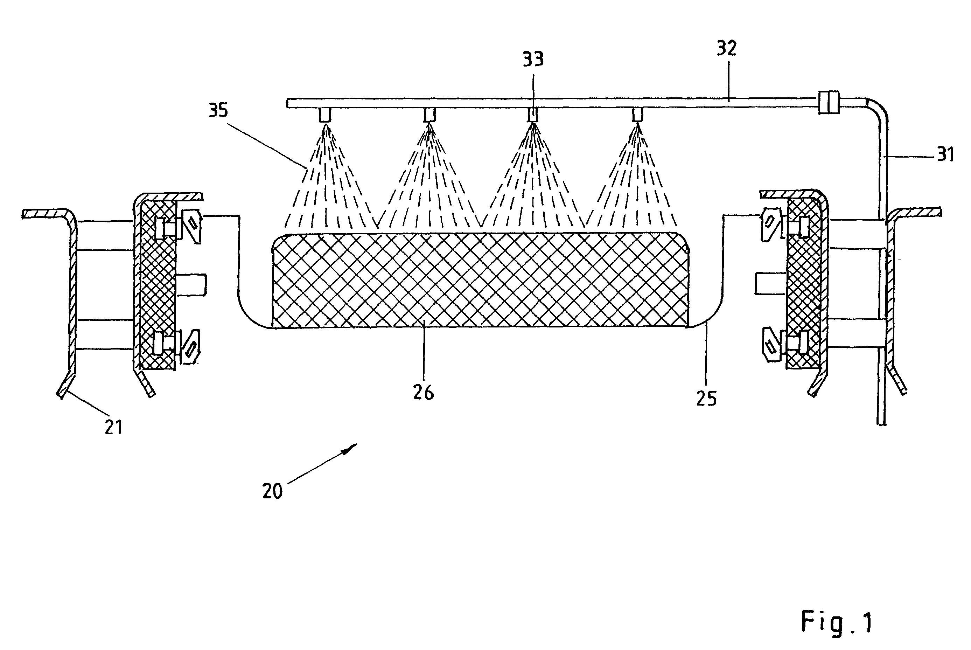

Zunächst wird auf Fig. 1 Bezug genommen.

Darin ist ein Teil einer erfindungsgemäßen Tiefziehverpackungsmaschine 20 abgebildet. Es handelt sich dabei um einen Bereich unmittelbar vor dem Siegelwerkzeug. An dem Maschinenrahmen 21 sind Halterungsmittel angebracht, um die in einer Tiefziehstation ausgeformte Unterfolie 25 mit dem darauf befindlichen Produkt 26 zu haltern. Ebenfalls an dem Maschinenrahmen 21 ist eine Zuführleitung 31 angebracht, die oberhalb des Produktes in eine Verteilerleiste 32 übergeht, an deren Unterseite Düsen 33 für das Ausstoßen eines Sprühstrahls 35 angeordnet sind.

Das erfindungsgemäße Besprühen beispielsweise mit einem Gewürz-Rauch-Kondensat erfolgt vor der Siegelstation der Tiefziehverpackungsmaschine 20 in einem Stadium, in dem das Produkt 26 von oben noch nicht gesiegelt ist, so daß von oben durch die Düsen 33 ausgesandte Sprühstrahlen 35 ungehindert auf die Oberfläche des Produktes auftreffen können. Die Sprühvorrichtung ist in Förderrichtung unmittelbar vor der Siegeleinrichtung angeordnet.

Nach der Besprühung des Produktes wird dieses zusammen mit der ausgeformten Unterfolie 25 in die Siegelstation überführt und im nächsten Takt ganz normal versiegelt.

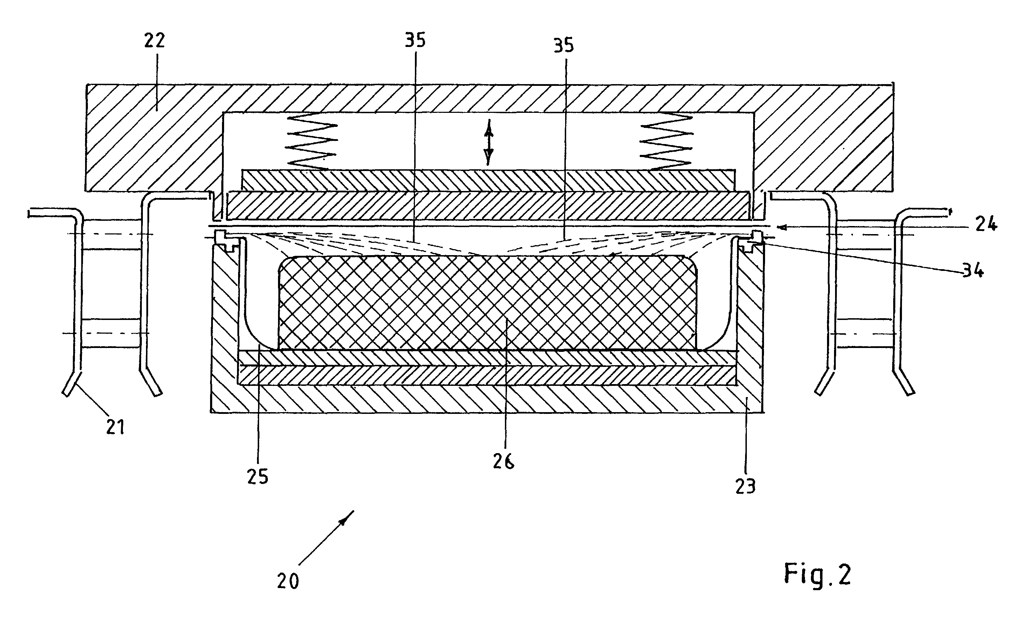

In Fig. 2 ist eine weitere Ausführungsform einer erfindungsgemäßen Tiefziehverpackungsmaschine 20 dargestellt, bei der das Besprühen des Produkts mit Kondensat innerhalb der Siegelstation erfolgt. Dazu ist die Sprühvorrichtung in der Siegeleinrichtung angeordnet. Fig. 2 zeigt ein am Maschinenrahmen 21 angebrachtes Siegel-Werkzeugoberteil 22 mit dem ein beispielsweise an einem Hubträger angebrachtes Siegel-Werkzeugunterteil 23 zusammenwirken kann. In dem abgebildeten Ausführungsbeispiel befindet sich das auf der ausgeformten Unterfolie 25 aufliegende Produkt 26 im Bereich des wannenförmig ausgebildeten Siegel-Werkzeugunterteils 23. An den Seiten des Siegel-Werkzeugunterteils 23 sind Einspritzdüsen 34 angeordnet, die von der Seite und von oben her mittels eines Sprühstrahls 35 Kondensat auf das Produkt 26 sprühen können.

Die Besprühung des Produkts 26 erfolgt nach Einbringung des in der ausgeformten Unterfolie 25 befindlichen Produktes 26 in die Siegelstation nach dem Schließen des Siegel-Werkzeugs. Hierzu wird zuerst der zwischen Unterkante des SiegelWerkzeugoberteils 22 und der ausgeformten Unterfolie 25 bestehende Raum evakuiert bzw. leergepumpt. Daran anschließend wird anstelle der gemäß im Stand der Technik bekannten Begasung oder zusätzlich zu der gemäß im Stand der Technik bekannten Begasung Kondensat beispielsweise in Form von Gewürz-Rauch-Kondensat bzw. Flüssigrauch in den vorgenannten Raum gesprüht, so daß die Oberfläche des Produktes 26 von dem Kondensat benetzt wird. Anschließend wird die Oberfolie 24 auf die ausgeformte Unterfolie 25 aufgedrückt und durch Hitzeeinwirkung mit dieser versiegelt.

Ähnlich wie bei der in Fig. 1 und Fig. 2 abgebildeten Tiefziehverpackungsmaschine kann bei einer Schalensiegelverpackungsmaschine das Produkt vor dem Versiegeln mit Kondensat besprüht werden. Bei einer derartigen Schalensiegelverpackungsmaschine wird das Produkt vor dem Siegeln von oben begast und/oder mit Kondensat besprüht. Anstelle der tiefgezogenen Unterfolie findet bei der Schalensiegelverpackungsmaschine eine vorgefertigte Schale Verwendung.

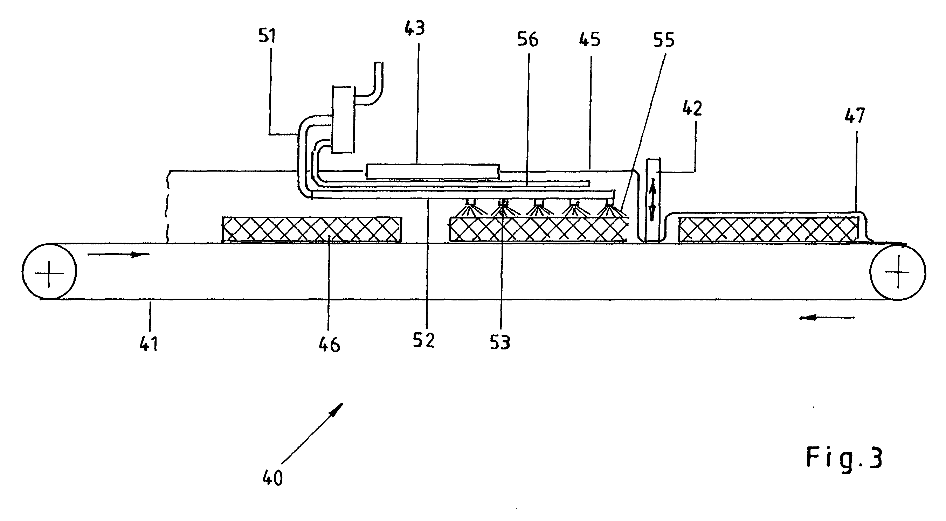

Bei der in Fig. 3 abgebildeten Schlauchbeutelverpackungsmaschine 40 wird das Produkt 46 vor der Quersiegelung des Schlauchbeutels mit Kondensat besprüht. Fig. 3 zeigt einen Ausschnitt einer erfindungsgemäßen Schlauchbeutelverpackungsmaschine 40 mit einem Förderband 41, auf dem die Produkte 46 dem Siegelbereich zugeführt werden. Nach einer Längssiegeleinheit 43 befindet sich das Produkt 46 in einem Schlauchbeutel, der von einer Folie 45 gebildet wird, wobei der Schlauchbeutel in Bewegungsrichtung nach hinten geöffnet ist. In diesem Schlauchbeutel ragt eine von der Zuführleitung 51 für das Kondensat ausgehende Verteilerleiste 52 hinein, die an ihrer Unterseite Düsen 53 aufweist, von denen ein nach unten gerichteter Sprühstrahl 55 ausgehen kann. Weiterhin ragt ebenfalls von der Zuführleitung 51 ausgehend eine Überprüfungsleitung 56 von hinten in den noch geöffneten Schlauchbeutel. Diese ist aus dem Stand der Technik bekannt und dient der Überprüfung der Begasung. Durch die von den Düsen 53 ausgehenden Sprühstrahlen 55 wird das Produkt vor der Querversiegelung des Schlauchbeutels in der Quersiegeleinheit 42 von oben mit Kondensat besprüht. In Förderrichtung hinter der Quersiegeleinheit 42 ist eine versiegelte Packung 47 abgebildet. Die in Fig. 3 abgebildete Ausführungsform einer erfindungsgemäßen Schlauchbeutelverpackungsmaschine 40 realisiert das Besprühen des Produktes 46 während des Stillstandes des Produktes 46, während gleichzeitig das in Förderrichtung vorausliegende Produkt von der Quersiegeleinheit 42 versiegelt wird.

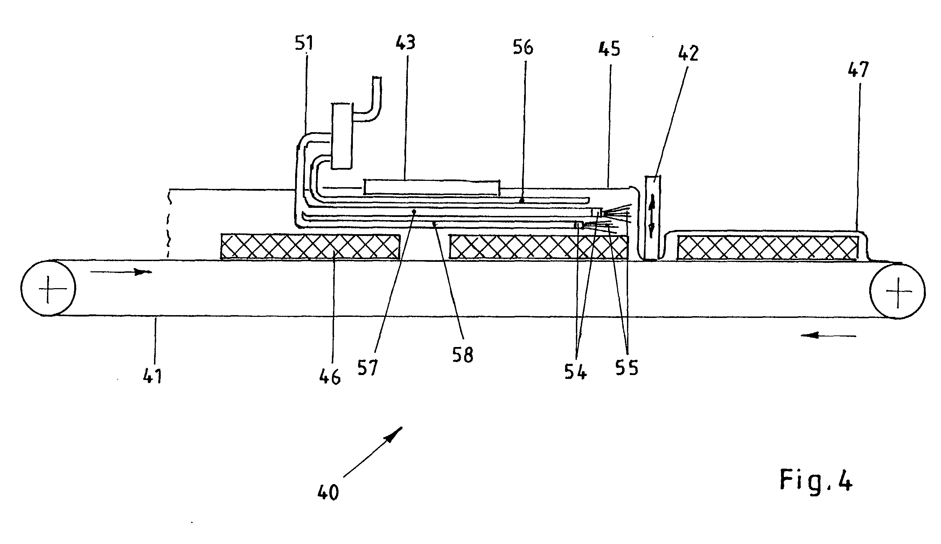

Die in Fig. 4 abgebildete Ausführungsform einer erfindungsgemäßen Schlauchbeutelverpackungsmaschine 40 weist ebenfalls ein Förderband 41, eine Längssiegeleinheit 43 und eine Quersiegeleinheit 42 auf. Die Zuführleitung 51 verzweigt sich in Förderrichtung in zwei Teilleitungen 57, 58 die jeweils an ihrem Ende Düsen 54 aufweisen, aus denen das Kondensat in Form von Sprühstrahlen 55 herausbefördert werden kann. Auch die in Fig. 4 abgebildete Ausführungsform einer erfindungsgemäßen Schlauchbeutelverpackungsmaschine 40 umfaßt eine Überprüfungsleitung 56. Die Besprühung des Produktes 46 erfolgt in dem in Fig. 4 abgebildeten Ausführungsbeispiel während der Dauer des Vorschubtaktes nach dem bereits von der Begasung von Schlauchbeuteln bekannten Methode.

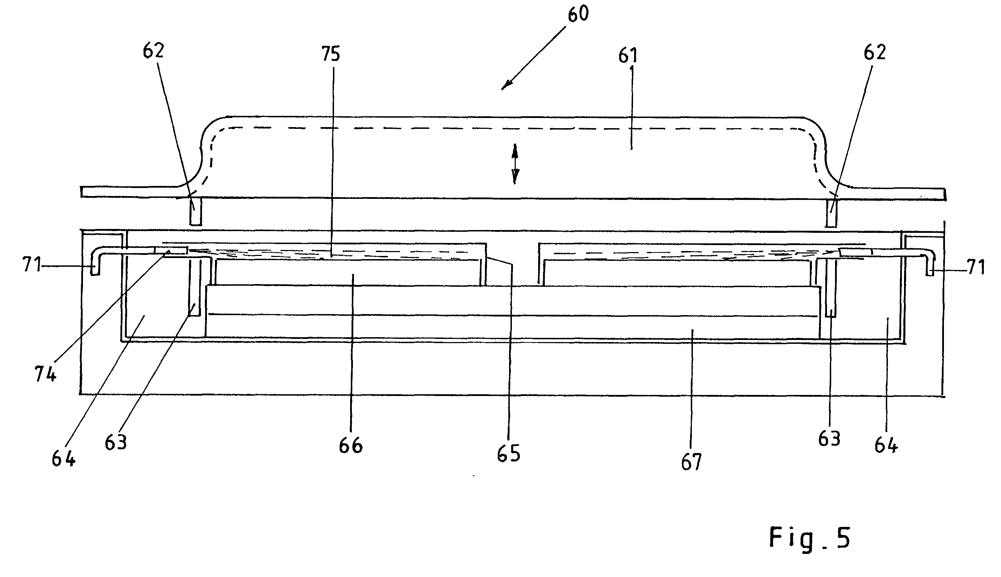

In Fig. 5 ist eine erfindungsgemäße Kammerverpackungsmaschine 60 abgebildet. In die abgebildete Kammerverpackungsmaschine 60 können jeweils zur gleichen Zeit zwei Produkte 66, die vorher in einen zur Seite offenen Beutel 65 eingebracht wurden, versiegelt werden. Die abgebildete Kammerverpackungsmaschine 60 umfaßt einen Kammerdeckel 61, der nach oben bzw. unten bewegbar ist. Weiterhin umfaßt die abgebildete Kammerverpackungsmaschine 60 eine Vakuumkammer 64, auf deren Unterseite Distanzplatten 67 aufgelegt werden können, um die Größe der Vakuumkammer 64 an die eingebrachten Produkte 66 bzw. diese umgebenen Beutel 65 anzupassen. An den beiden Seiten weist die Kammerverpackungsmaschine 60 jeweils eine obere und eine untere Siegelleiste 62, 63 auf. Von jeder der Seiten ragt eine Zuführleitung 71 so in die Vakuumkammer 64 hinein, daß sie in die seitliche Öffnung der in der Kammer befindlichen Beutel 65 hineinragen kann. Am Ende der Zuführleitungen 71 sind Einspritzdüsen 74 angeordnet, die vermittels eines Sprühstrahles 75 das Produkt 66 mit Kondensat besprühen können.

Bei der Fig. 5 abgebildeten Kammerverpackungsmaschine 60 wird das erfindungsgemäße Besprühen dadurch erreicht, daß zuerst das Produkt 66 in den Beutel 65 eingebracht wird. Anschließend werden die seitlichen Öffnungen des Beutels 65 um die Zuführleitung 71 bzw. die an deren vorderen Enden angebrachten Einspritzdüsen 74 herumgelegt. Anschließend wird der Kammerdeckel 61 herabgefahren, so daß die Vakuumkammer 64 evakuiert werden kann. Anschließend wird Kondensat über die Zuführleitungen 71 und die Einspritzdüsen 74 in die Beutel 65 auf das Produkt 66 gesprüht. Gleichzeitig dazu kann auch die Vakuumkammer 64 begast werden, so daß auch das Produkt 66 in dem Beutel 65 von Gas umgeben ist. Daran anschließend werden vermittels der Siegelleisten 62, 63 die Beutel 65 versiegelt.

Die an die Enden der Zuführleitungen 31, 51, 71 angebrachten Düsen 33, 53 können als Mehrfachdüsen mit Zuführung des Kondensats von oben und oder von der Seite auf das Produkt ausgeführt sein. Vermittels der an den von der Zuführleitung 51 ausgehenden Teilleitungen 57, 58 angebrachten Düsen 54 kann das Produkt 46 mit Kondensat nach dem Prinzip der Begasung besprüht werden. Die Einspritzdüsen 34, 74 können als Einfachdüsen mit Zuführung des Kondensats von oben und von der Seite auf das Produkt 26, 66 ausgestaltet sein. Es besteht auch die Möglichkeit das Produkt 26, 46, 66 mit Kondensat von beiden Seiten gleichzeitig oder einzeln mit Düsen zu besprühen.

## Patentansprüche

1. Verpackungsmaschine für Lebensmittel, umfassend mindestens eine Siegeleinrichtung (22, 23, 42, 62, 63), in der Aufnahmebehälter (25, 45, 65) in Form von Beuteln, Schläuchen oder schalenähnlichen Formteilen, die die zu verpackenden Lebensmittelprodukte (26, 46, 66) aufnehmen können, versiegelt werden können, dadurch gekennzeichnet, daß die Verpackungsmaschine (20, 40, 60) eine Sprühvorrichtung (31 bis 34, 51 bis 54, 71, 74) umfaßt, die das Besprühen der Lebensmittelprodukte (26, 46, 66) mit Kondensat ermöglicht, und daß die Sprühvorrichtung (31 bis 34, 51 bis 54, 71, 74) in Förderrichtung unmittelbar vor oder in der Siegeleinrichtung (22, 23, 42, 62, 63) angeordnet ist.

2. Verpackungsmaschine nach Anspruch 1, dadurch gekennzeichnet, daß die Verpackungsmaschine (20, 40, 60) weiterhin eine Vakuumeinrichtung (64) umfaßt, die ein Evakuieren der zu versiegelnden Aufnahmebehälter (25, 45, 65) vor oder nach dem Besprühen mit Kondensat ermöglicht.

3. Verpackungsmaschine nach Anspruch 2, dadurch gekennzeichnet, daß die Verpackungsmaschine (20, 40, 60) weiterhin eine Begasungseinrichtung umfaßt, die eine Begasung des in dem zu versiegelnden Aufnahmebehälter (25, 45, 65) befindlichen Lebensmittelprodukts (26, 46, 66) nach dem Evakuieren ermöglicht.

4. Verpackungsmaschine nach einem der Ansprüche 1 bis 3, dadurch gekennzeichnet, daß die Sprühvorrichtung (31 bis 34, 51 bis 54, 71, 74) mindestens eine Düse (33, 34, 53, 54, 74) umfaßt, die ein Besprühen des Lebensmittelprodukts (26, 46, 66) mit Kondensat zuläßt.

5. Verpackungsmaschine nach Anspruch 4, dadurch gekennzeichnet, daß die Sprühvorrichtung (31 bis 34, 51 bis 54, 71, 74) eine Zuführleitung (31, 51, 71) für das Kondensat umfaßt, die an ihrem Ende oder am Ende einer oder mehrerer davon ausgehender Teilleitungen (57, 58) jeweils eine der Düsen (34, 54, 74) trägt.

6. Verpackungsmaschine nach einem der Ansprüche 4 oder 5, dadurch gekennzeichnet, daß die Sprühvorrichtung (31 bis 34, 51 bis 54, 71, 74) eine Zuführleitung (31, 51, 71) umfaßt, die in mindestens eine Verteilerleiste (32, 52) übergeht, an der mehrere der Düsen (33, 53) angebracht sind.

7. Verpackungsmaschine nach einem der Ansprüche 4 bis 6, dadurch gekennzeichnet, daß die Düsen (33, 34, 53, 54, 74) die Besprühung des Lebensmittelprodukts (26, 46, 66) von oben und/oder von der Seite erlauben.

8. Verpackungsmaschine nach einem der Ansprüche 1 bis 7, dadurch gekennzeichnet, daß die Verpackungsmaschine (20) als Tiefziehverpackungsmaschine ausgebildet ist.

9. Verpackungsmaschine nach Anspruch 8, dadurch gekennzeichnet, daß bei der Tiefziehverpackungsmaschine das Besprühen des Lebensmittelprodukts (26) in Förderrichtung unmittelbar vor der Siegeleinrichtung (22, 23) erfolgt.

10. Verpackungsmaschine nach Anspruch 8, dadurch gekennzeichnet, daß bei der Tiefziehverpackungsmaschine das Besprühen des Lebensmittelprodukts (26) innerhalb der Siegeleinrichtung (22, 23) erfolgt.

11. Verpackungsmaschine nach einem der Ansprüche 1 bis 7, dadurch gekennzeichnet, daß die Verpackungsmaschine als Schalensiegelverpackungsmaschine ausgebildet ist.

12. Verpackungsmaschine nach einem der Ansprüche 1 bis 7, dadurch gekennzeichnet, daß die Verpackungsmaschine (40) als Schlauchbeutelverpackungsmaschine ausgebildet ist.

13. Verpackungsmaschine nach Anspruch 12, dadurch gekennzeichnet, daß die Besprühung des Lebensmittelprodukts (46) in der Schlauchbeutelverpackungsmaschine während der Dauer eines Vorschubtaktes kurz vor dem Versiegeln erfolgt.

14. Verpackungsmaschine nach Anspruch 12, dadurch gekennzeichnet, daß die Besprühung des Lebensmittelprodukts (46) in der Schlauchbeutelverpackungsmaschine während des Stillstands des Lebensmittelprodukts (46) erfolgt, insbesondere während gleichzeitig das in Förderrichtung benachbarte Lebensmittelprodukt (46) in dem ihn umgebenden als Schlauch ausgebildeten Aufnahmebehälter (45) versiegelt wird.

15. Verpackungsmaschine nach einem der Ansprüche 1 bis 7, dadurch gekennzeichnet, daß die Verpackungsmaschine (60) als Kammerverpackungsmaschine ausgebildet ist.

16. Verpackungsmaschine nach Anspruch 15, dadurch gekennzeichnet, daß bei der Kammerverpackungsmaschine der Aufnahmebehälter (65) als Beutel ausgebildet ist, in den von der Seite her ein Teil der Sprühvorrichtung (71, 74) hineinragen kann, aus dem heraus das Lebensmittelprodukt (66) besprüht werden kann.

17. Verpackungsmaschine nach einem der Ansprüche 1 bis 16, dadurch gekennzeichnet, daß als Kondensat ein Gewürzrauchkondensat oder Flüssigrauch Verwendung finden.

## Claims

1. Packaging machine for food products comprising at least one sealing device (22, 23, 42, 62, 63) in which receiving containers (25, 45, 65) in the form of bags, tubes or cup-shaped moulded parts which can receive the food products (26, 46, 66) to be packed can be sealed, characterised in that the packaging machine (20, 40, 60) comprises a spray apparatus (31 to 34, 51 to 54, 71, 74) which makes it possible to spray the food products (26, 46, 66) with condensate, and that the spray apparatus (31 to 34, 51 to 54, 71, 74) is arranged in the conveying direction immediately in front of or within the sealing device (22, 23, 42, 62, 63).

2. Packaging machine as claimed in claim 1, characterised in that the packaging machine (20, 40, 60) further comprises a vacuum device (64) which makes it possible to evacuate the receiving containers (25, 45, 65) to be sealed before or after spraying with condensate.

3. Packaging machine as claimed in claim 2, characterised in that the packaging machine (20, 40, 60) further comprises a device for gas treatment which makes possible to treat the food product (26, 46, 66) in the receiving container (25, 45, 65) to be sealed with gas after evacuation.

4. Packaging machine as claimed in any one of claims 1 to 3, characterised in that the spray apparatus (31 to 34, 51 to 54, 71, 74) comprises at least one nozzle (33, 34, 53, 54, 74) which allows a spraying of the food product (26, 46, 66) with condensate.

5. Packaging machine as claimed in claim 4, characterised in that the spray apparatus (31 to 34, 51 to 54, 71, 74) comprises a supply line (31, 51, 71) for the condensate which carries at its end, or at the ends of one or several line sections (57, 58) branching thereof, in each case one of the nozzles (34, 54, 74).

6. Packaging machine as claimed in one of claims 4 or 5, characterised in that the spray apparatus (31 to 34, 51 to 54, 71, 74) comprises a supply line (31, 51, 71) which merges into at least one distribution terminal (32, 52) at which some of the nozzles (33, 53) are provided.

7. Packaging machine as claimed in any one of claims 4 to 6, characterised in that the nozzles (33, 34, 53, 54, 74) allow the spraying of the food product (26, 46, 66) from above and/or from the sides.

8. Packaging machine as claimed in any one of claims 1 to 7, characterised in that the packaging machine (20) is formed as a deep-drawing packaging machine.

9. Packaging machine as claimed in claim 8, characterised in that in the case of the deep-drawing packaging machine the spraying of the food product (26) is effected directly upstream of the sealing device (22, 23) in the conveying direction.

10. Packaging machine as claimed in claim 8, characterised in that in the case of the deep-drawing packaging machine the spraying of the food product (26) is effected within the sealing device (22, 23).

11. Packaging machine as claimed in any one of claims 1 to 7, characterised in that the packaging machine is formed as a tray sealing packaging machine.

12. Packaging machine as claimed in any one of claims 1 to 7, characterised in that the packaging machine (40) is formed as a pouch packaging machine.

13. Packaging machine as claimed in claim 12, characterised in that the spraying of the food product (46) is effected in the pouch packaging machine during the duration of a feed cycle just before sealing.

14. Packaging machine as claimed in claim 12, characterised in that the spraying of the food product (46) in the pouch packaging machine is effected during the standstill of the food product (46), in particular at the same time when the food product (46) adjacent thereto in the conveying direction is sealed in the receiving container (45) surrounding it and formed as a pouch.

15. Packaging machine as claimed in any one of claims 1 to 7, characterised in that the packaging machine (60) is formed as a compartment packaging machine.

16. Packaging machine as claimed in claim 15, characterised in that in the case of the compartment packaging machine the receiving container (65) is formed as a bag into which a part of the spray apparatus (71, 74), by means of which the food product (66) can be sprayed, can extend from the side.

17. Packaging machine as claimed in any one of claims 1 to 16, characterised in that as condensate an aromatic smoke condensate or liquid smoke are used.

## Revendications

1. Machine d'emballage pour denrées alimentaires, comprenant au moins un dispositif de scellement (22,23,42, 62,63), dans lequel des récipients de logement (25,45,65) sous forme de sachets, de tuyaux ou de pièces de forme semblables à des coques, qui peuvent recevoir les articles de denrées alimentaires (26,46,66) à emballer, peuvent être scellés, caractérisée en ce que la machine d'emballage (20,40,60) comprend un dispositif de pulvérisation (31 à 34, 51 à 54, 71, 74) qui permet la pulvérisation d'un condensat sur les articles de denrées alimentaires (26,46,66), et que le dispositif de pulvérisation (31 à 34, 51 à 54, 71, 74) est disposé, dans la direction d'entraînement, juste en amont du dispositif de scellement (22,23,42,62,63) ou dans ce dispositif.

2. Machine d'emballage selon la revendication 1, caractérisée en ce que la machine d'emballage (20,40,60) comporte en outre un dispositif à dépression (64), qui permet d'établir un vide dans les récipients de logement (25,45,65) à sceller, avant ou après la pulvérisation avec le condensat.

3. Machine d'emballage selon la revendication 2, caractérisée en ce que la machine d'emballage (20,40,60) comporte en outre un dispositif d'application de gaz, qui permet, après l'établissement du vide, d'appliquer un gaz aux articles de denrées alimentaires (26,46,66) situés dans le récipient de logement (25,45,65) à sceller.

4. Machine d'emballage selon l'une des revendications 1 à 3, caractérisée en ce que le dispositif de pulvérisation (31 à 34, 51 à 54, 71, 74) comprend au moins une buse (33,34,53,54,74), qui permet une pulvérisation de l'article de denrée alimentaire (26,46,66) avec le condensat.

5. Machine d'emballage selon la revendication 4, caractérisée en ce que le dispositif de pulvérisation (31 à 34, 51 à 54, 71, 74) comprend une canalisation d'amenée (31,51,71) pour le condensat, qui porte à son extrémité ou sur l'extrémité d'une ou de plusieurs canalisations partielles (57,58) s'étendant à partir de cette canalisation, respectivement l'une des buses (34,54,74).

6. Machine d'emballage selon l'une des revendications 4 ou 5, caractérisée en ce que le dispositif de pulvérisation (31 à 34, 51 à 54, 71, 74) comporte une canalisation d'amenée (31,51,71), qui se prolonge par au moins une barrette de distribution (32,52), sur laquelle sont montées plusieurs des buses (33,53).

7. Machine d'emballage selon l'une des revendications 4 à 6, caractérisée en ce que les buses (33,34,53,54,74) permettent d'appliquer la pulvérisation à l'article de denrée alimentaire (26,46,66) à partir du haut et/ou latéralement.

8. Machine d'emballage selon l'une des revendications 1 à 7, caractérisée en ce que la machine d'emballage (20) est agencée sous la forme d'une machine d'emballage avec emboutissage.

9. Machine d'emballage selon la revendication 8, caractérisée en ce que dans le cas de la machine d'emballage avec emboutissage, la pulvérisation appliquée à l'article de denrée alimentaire (26) s'effectue juste en amont du dispositif de scellement (22,23) dans la direction d'entraînement.

10. Machine d'emballage selon la revendication 8, caractérisée en ce que dans la machine d'emballage avec emboutissage, la pulvérisation de l'article de denrée alimentaire (26) s'effectue à l'intérieur du dispositif de scellement (22,23).

11. Machine d'emballage selon l'une des revendications 1 à 7, caractérisée en ce que la machine d'emballage est agencée sous la- forme d'une machine d'emballage avec scellement de coques.

12. Machine d'emballage selon l'une des revendications 1 à 7, caractérisée en ce que la machine d'emballage (40) est agencée sous la forme d'une machine d'emballage de sachets tubulaires

13. Machine d'emballage selon la revendication 12, caractérisée en ce que la pulvérisation appliquée à l'article de denrée alimentaire (46) s'effectue dans la machine d'emballage de sachets tubulaires, pendant la durée d'un cycle d'avance, peu avant le scellement.

14. Machine d'emballage selon la revendication 12, caractérisée en ce que la pulvérisation appliquée à l'article de denrée alimentaire (46) dans la machine d'emballage de sachets tubulaires s'effectue pendant l'état d'arrêt de l'article de denrée alimentaire (46), notamment pendant que l'article de denrée alimentaire (46) voisin dans la direction d'entraînement est scellé simultanément dans le récipient de logement (45) agencé en forme de tuyau, qui entoure l'article.

15. Machine d'emballage selon l'une des revendications 1 à 7, caractérisée en ce que la machine d'emballage (60) est agencée sous la forme d'une machine d'emballage à chambres.

16. Machine d'emballage selon la revendication 15, caractérisée en ce que dans la machine d'emballage à chambres, le récipient de logement (65) est agencé sous la forme d'un sachet, dans lequel une partie du dispositif de pulvérisation (71,74) peut pénétrer latéralement et hors duquel une pulvérisation peut être appliquée à l'article de denrée alimentaire (66).

17. Machine d'emballage selon l'une des revendications 1 à 16, caractérisée en ce qu'on utilise comme condensat un condensat de vapeur d'aromate ou de vapeur de liquide.
